# EUROPEAN PATENT APPLICATION

(11) **EP 4 253 506 A1**
(43) Date of publication of application: **04.10.2023**
(21) Application number: 20963221.5
(22) Date of filing: 14.12.2020
(51) Int. Cl.: C10J 3/66

(54) **METHOD FOR PRODUCING WATER GAS FROM EMPTY FRUIT BUNCHES OF PALM TREES**

(30) Priority: 26.11.2020 CN 202011349661
(71) Applicant: Hsiao, Ming-Yao, Taichung, 40601 (TW)
(72) Inventor: Hsiao, Ming-Yao, Taichung, 40601 (TW)
(74) Representative: Potter Clarkson
(86) International application number: PCT/CN2020/136153
(87) International publication number: WO 2022/110333

(57) **Abstract**

The present invention discloses a method for producing water gas from palm tree empty fruit bunches. The method comprises the following steps of converting a raw material into palm biochar through physical and chemical reactions of drying and dehydration at 250°C-420°C by taking a waste of empty fruit bunches extruded from palm oil mill as raw material and then placing a carbon matrix in a water gas generator and converting the palm biochar into a water gas fuel. The preparation method of the present invention is simple, the conversion rate of converting the palm biocarbon into the water gas is high, and the obtained water gas is low in pollution and high in heat energy. The present invention provides a novel method for treatment and reuse of a palm oil processing waste, and can be used as an effective substitute for a non-renewable energy source which is coal for producing the water gas.

## Description

### Technical Field

The invention relates to the technical field of water gas preparation, in particular to a method for producing water gas from palm tree empty fruit bunches.

### Background Art

Production of palm oil is an important industry. After the palms are mature, fruits are separated from stems, with empty fruit bunches (EFBs) as wastes. Millions of millions of tons of EFB are produced every year. Most EFB are burned into ashes that are used as fertilizers for plants, but burning of the EFBs will induce great environmental pollution. Since various primitive biofuels are not easily stored for a long time and are extremely easily degraded, they are relatively low in energy density, so that long-distance transportation is extremely uneconomical. Although certain progresses of boilers have been made in thermal energy utilization, the overall energy utilization rate has been still very low. Therefore, energy sources are obtained from biomass in other forms to improve energy utilization, which meets long-distance energy supply and reserve.

Water gas is a gas generated by water vapor passing through hot cokes. The main components are carbon monoxide and hydrogen. After combustion, water and carbon dioxide are emitted. In a conventional method, anthracite coal is used as a raw material, and the produced water gas contains a large amount of sulfur dioxide and hydrogen sulfide gas, which seriously damages the production environment and equipment. At the same time, coal as a non-renewable energy source, its development and utilization has great limitations. With the advantages of Roundtable on sustainable Palm oil empty fruit bunch, low pollution (sulfur content is as low as 0.033) and good combustion efficiency, the biomass carbon from palm tree empty fruit bunches has been widely used in many fields, and the biomass carbon is particularly suitable for being converted into the water gas. There has been no report on the use of empty palm fruit bunches to produce water gas yet, so the development and utilization of palm tree empty fruit bunches from palm industry wastes has a wide prospect.

### Summary of the Invention

The present invention aims to provide a method for producing water gas from palm tree empty fruit bunches, wherein the empty fruit bunch wastes produced in a palm oil production process are used fully, the obtained water gas is relatively high in yield and heat value, and a production process is clean.

The method for producing water gas from palm tree empty fruit bunches of the present invention includes the following steps of

### 1) Smoldering and carbonizing of palm tree empty fruit bunches

Performing smoldering and carbonizing of palm tree empty fruit bunches in an airtight chamber to obtain carbon-based fibers;

### 2) Pre-treatment of carbon-based fibers

Crushing the carbon-based fibers obtained in the step 1) to obtain carbon-based fiber powder;

### 3) Preparation of water gas

Feeding the carbon based fiber powder obtained in the step 2) into a gas generator for performing a water gas reaction and collecting the water gas, wherein

The palm tree empty fruit bunches in the step 1) are cut into 2mm-80mm granules;

In the step 1), the smoldering temperature is 250°C- 420°C, and more than 90% of the carbon-based fibers are carbonized;
the particle size of carbon-based fiber powder in the step 2) is 2mm-60mm.
the gas generator in the step 3) is a single/double stage gas generator, a normal pressure fixed-bed gas generator or mobile-bed gas generator;
the carbon-based fiber powder in the step 3) is dried at 150°C-200°Cfor 1-6 hours before being fed into the gas generator, and is then preheated at 150°Cfor 1-2 hours.

The beneficial effects of the present invention are that the method comprises the following steps of converting a raw material into palm biochar through physical and chemical reactions of drying and dehydration at 250°C-420°C by taking a waste of empty fruit bunches extruded from palm oil mill as the raw material; and then placing a carbon matrix in a water gas generator and converting the palm biochar into a water gas fuel. The preparation method of the present invention is simple, and the conversion rate of converting the palm biocarbon into the water gas is high. The sulfur content of the biomass carbon in the empty fruit bunches of the palm trees prepared by the present invention is as low as 0.033%, and the biomass carbon has the advantages of being low in pollution, good in burning benefit, renewable and the like, so that the biomass carbon is particularly suitable for being converted into the water gas. The present invention provides a novel method for treatment and reuse of a palm oil processing waste, and can be used as an effective substitute for a non-renewable energy source which is coal for producing the water gas.

### Embodiments

The present invention is further described in detail in combination with the embodiments, but the present invention is not limited to these embodiments.

### Example 1

The method for producing water gas from palm tree empty fruit bunches of the present invention includes the following steps of

### 1) Smoldering and carbonizing of palm tree empty fruit bunches

50kg-5000kg of palm tree empty fruit bunches were cut into 2mm-80mm granules, smoldering and carbonizing of palm tree empty fruit bunches were performed in an airtight chamber at 250°C-420°C for 20 minutes to 24 hours, a carbonization depth tester was used to examine, and heating was stopped when 90% of the carbon-based fibers were carbonized, and then the carbon-based fibers were taken out after being cooled.

The applicant tested the carbon-based fiber samples obtained in the step 1) (sample number: KI/2020/80435, testing unit: SGS Taiwan Ltd.). A result was shown in the Table 1, and its sulfur content was as low as 0.033% without sulfur pollution.

### 2) Pre-treatment of carbon-based fibers

The carbon-based fibers obtained in the step 1) were pulverized into carbon-based fiber powder with a particle size of 2mm-60mm by means of a ball mill or a high-speed pulverizer.

### 3) preparation of water gas

The carbon-based fiber powder obtained in the step 2 was dried at 150°C-200°Cfor 1-6 hours, was preheated at 150°Cfor 1-2 hours, and was fed into a gas generator for performing a water gas reaction and collecting the water gas.

The gas generator was a single/double stage gas generator or a normal pressure fixed-bed gas generator or mobile-bed gas generator, with a feed port diameter of 80mm-160mm, and was operated normally in accordance with instructions of the gas generator.

The main chemical reaction formulae in the gas generator were shown in formulae 1) ~3):

1) CO+C=2CO

2) H₂O+C=H₂+CO

3) 2H₂O+C=CO₂+2H₂.

During a water-gas reaction process, gases capable of being produced account for 65-68% with the balance blast gases. Components and contents of the obtained water gas are shown in Table 2 below, and its heat value is 10984 kJ/m³. The CO+H₂ contained in the discharged blast gases are about 10.92%, and the heat value is about 1530 kJ/m³. This part of heat is considered as a loss. The gasification efficiency of the water gas is 62.3% and the thermal efficiency is 57%.

**Table 1 Carbon-based fiber detection table**

| Term | | Unit | Result |
|---|---|---|---|
| Moisture | Wt% | | 3.323 |
| Flammable | wt% | | 92.66 |
| Ash | wt% | | 4.017 |
| Gross calorific value | Kcal/Kg | | 5324 |
| Sulfur (S) | wt% | | 0.0330 |

Remarks: mg/kg=ppm; 0.1 wt%=1000ppm.

**Table 2 Water Gas Composition Table**

| Composition | CO₂ | H₂S | O₂ | CO | H₂ | CH₄ | N₂ |
|---|---|---|---|---|---|---|---|
| Content% | 6.2 | 0.005 | 0.23 | 38.5 | 49.2 | 0.6 | 6.38 |

Palm tree empty fruit bunches are natural plants with irregular sizes. The carbonization temperature and time are needed to be set according to moisture, weight and other conditions of the raw material. The carbonization value is controlled to be 90% or over, so that the water gas production achieves good results. Table 3 is carbonization temperature time table. By taking 50kg-500Kg raw materials as an example, times required for carbonization of more than 90% under different temperature conditions are measured.

**Table 3 Carbonization temperature time table**

| Temperature (°C) | Time |
|---|---|
| 250 | 20 Hours |
| 300 | 6Hours |
| 350 | 2Hours |
| 420 | 20 Minutes |

It can be seen from the results in Table 1 and Table 2 that the biomass carbon produced by using palm tree empty fruit bunches according to the present invention has the advantages of low pollution (sulfur content is as low as 0.033%) and high heat generated by combustion (5324 Kcal/Kg). The H₂S content of the water gas produced by the biomass carbon is as low as 0.005%, and the CO+H₂ content is 87.7%. Thus, the water gas has the advantages of low pollution, high water gas gasification efficiency and high thermal efficiency. In addition, in the process of preparing water gas from the biomass carbon produced by palm tree empty fruit bunches, production will be realized by using an existing gas generator in the market. It is not needed to carry out large-scale equipment transformation, which leaded to small investment but high return. Palm tree empty fruit bunches may be promoted and utilized as an effective substitute for conventional water gas coal production. The method for producing water gas from the palm tree empty fruit bunches of the present invention has good market promotion value and social benefits.

## Claims

1. A method for producing water gas from palm tree empty fruit bunches, **characterized by** comprising the following steps of
1) Smoldering and carbonizing of palm tree empty fruit bunches
Performing smoldering and carbonizing of palm tree empty fruit bunches in an airtight chamber to obtain carbon-based fibers;
2) Pre-treatment of carbon-based fibers Crushing the carbon-based fibers obtained in the step 1) to obtain carbon-based fiber powder;
3) Preparation of water gas
Feeding the carbon based fiber powder obtained in the step (2) into a gas generator for performing a water gas reaction and collecting the water gas.

2. The method for producing water gas from palm tree empty fruit bunches according to claim 1, **characterized in that** the palm tree empty fruit bunches in the step 1) are cut into 2mm-80mm granules.

3. The method for producing water gas from palm tree empty fruit bunches according to claim 1 or claim 2, **characterized in that** in the step 1) smoldering temperature is 250°C-420°C, and more than 90% of the carbon-based fibers are carbonized.

4. The method for producing water gas from palm tree empty fruit bunches according to claim 1, **characterized in that** the particle size of the carbon-based fiber powder in step 2) is 2mm-60mm.

5. The method for producing water gas from palm tree empty fruit bunches according to claim 1, **characterized in that** the gas generator in the step 3) is a single/double stage gas generator, a normal pressure fixed-bed gas generator or mobile-bed gas generator .

6. The method for producing water gas from palm tree empty fruit bunches according to claim 1, **characterized in that** the carbon-based fiber powder in the step 3) is dried at 150°C-200°Cfor 1-6 hours before being fed into the gas generator, and is then preheated at 150°Cfor 1-2 hours.
